Europäisches Patentamt

(19) European Patent Office

Office européen des brevets

(11) Publication number: **0 081 327**
**A1**

## (12) EUROPEAN PATENT APPLICATION

(21) Application number: **82306316.9**

(22) Date of filing: **26.11.82**

(51) Int. Cl.³: **G 02 B 5/16**
**H 01 B 5/10**

(30) Priority: **27.11.81 GB 8135917**

(43) Date of publication of application:
**15.06.83 Bulletin 83/24**

(84) Designated Contracting States:
**AT BE DE FR IT NL SE**

(71) Applicant: **BICC Public Limited Company**
**21, Bloomsbury Street**
**London, WC1B 3QN(GB)**

(72) Inventor: **Dey, Philip**
**Pontwillim Brecon**
**Powys South Wales(GB)**

(74) Representative: **Ross Gower, Edward Lewis et al,**
**BICC Public Limited Company 38 Wood Lane**
**London W12 7DX(GB)**

(54) An improved flexible stranded body.

(57) In an overhead conductor in which an optical fibre 3 is loosely housed in the bore of a circumferentially rigid central metal core 1, the optical fibre is secured to the central core at each of a plurality of longitudinally spaced positions along the length of the conductor by a local deposit 4 of resin. The part of the optical fibre 3 extending between any two local deposits 4 of resin is loosely housed in, and of a length substantially greater than that of, that part of the bore. Risk that the excess length of the optical fibre 3 will accumulate at the lowest point of the bore of a suspended conductor is thereby reduced.

Fig. 1.

EP 0 081 327 A1

## AN IMPROVED FLEXIBLE STRANDED BODY      0081327

This invention relates to flexible stranded bodies of the kind which comprise a plurality of helically wound bare elongate elements of metal or metal alloy and which are adapted to be freely supported from spaced supports in long lengths. The invention is especially, but not exclusively, concerned with overhead electric conductors of the kind which comprise one or more than one layer of helically wound bare elongate elements of electrically conductive metal or metal alloy but it is to be understood that the invention does not exclude flexible stranded bodies not normally intended to carry electric current, for instance stranded wire ropes.

In the Complete Specification of our British Patent No. 1598438 there is described and claimed a flexible stranded body which includes at least one optical waveguide for use in the communications field adapted for transmission of light and which comprises at least one layer of helically wound bare elongate elements of metal or metal alloy, at least one elongate compartment within and extending throughout the length of the stranded body and, loosely housed in the elongate compartment or in at least one of the elongate compartments, at least one separate optical fibre and/or at least one optical bundle, as defined in the aforesaid Complete Specification.

One form of flexible stranded body lying within the scope of the aforesaid British patent comprises a substantially circumferentially rigid central core of metal or metal alloy having an elongate compartment within and extending throughout the length of the core; at least one optical fibre loosely housed in, and of a length substantially greater than that of, the elongate compartment; and, surrounding the central core, at least one layer of helically wound bare elongate elements of metal or metal alloy. Such a flexible stranded body will hereinafter, for convenience, be referred to as "a flexible stranded body of the kind described".

By virtue of being housed loosely in the elongate compartment of a flexible stranded body of the kind described, limited relative movement between the or each optical fibre and the stranded body can take place when the stranded body vibrates, oscillates or is otherwise flexed, as may, for example, occur in the case when an overhead electric conductor or other freely supported flexible stranded body is subjected to winds. Limited relative movement between the or each optical fibre and the stranded body can also occur when the stranded body is subjected to a changing tensile load during and after its installation due to forces imposed on it by winches and brakes, etc, which are used in tensioning the stranded body to obtain a predetermind sagging condition; after installation, changes in tensile load in a stranded body can also occur due to changes in external loading and in temperature. Limited relative movement between the or each optical fibre and the stranded body can also occur whilst the stranded body is in service and creep gives rise to non-elastic extension of the stranded body.

It is an object of the present invention to provide an improved flexible stranded body of the kind described.

According to the invention, in the improved flexible stranded body of the kind described, the or each optical fibre loosely housed in the elongate compartment is secured to the central core at longitudinally spaced positions along the length of the stranded body, the part of the or each optical fibre extending between any two adjacent positions at which the optical fibre is secured to the central core being loosely housed in, and of a length substantially greater than that of, that part of the elongate compartment extending between said two adjacent positions.

The spacing between any two adjacent positions at which the optical fibre is secured to the central core will be such that, when the flexible stranded body is suspended between two pylons or other upstanding supports under its own weight, the part of the optical fibre between any two adjacent positions will not be bent or otherwise distorted to such an extent that the optical transmission efficiency of the optical fibre is impaired to an undesirable extent.

Preferably, the optical fibre loosely housed in the elongate compartment follows a substantially helical path and the distance between any two adjacent positions at which the optical fibre is secured to the central core lies in the range 10 to 12 times the pitch of the helix of the optical fibre. The length of the part of the optical fibre between any two of said adjacent positions preferably exceeds the distance between said two positions by from 1 to 3%.

The or each optical fibre may be secured to the central core at each of said longitudinally spaced positions by any technique that will not have a detrimental effect on the optical transmission efficiency of the optical fibre but, preferably, it is secured to the central core at each position by a local deposit of resin or other material that bonds both to the optical fibre and to the internal surface of the central core. For this purpose, it is preferred to employ a high temperature performance pressure sensitive adhesive of the silicone resin type, such as that sold under the trade. name Dow Corning 280A or 282 adhesive, which may or may not be cured by the addition of a peroxide curing agent.

Those parts of the elongate compartment not occupied by the optical fibre or optical fibres and the local deposits of resin or other material securing the or each optical fibre to the central core are preferably substantially filled with a water-impermeable medium of a grease-like nature which is of such a consistency that the part of the or each optical fibre extending between any two adjacent local deposits of resin is free to move relative to the central core when the flexible stranded body vibrates, oscillates or is otherwise flexed. The greasy water-impermeable medium may consist of, or may comprise as a major constituent, petroleum jelly.

Although the or each optical fibre of the improved flexible stranded body is preferably separate and unsupported, in some circumstances it may be a component element of an optical bundle (by which is meant a group of optical fibres or a group of fibres including at least one optical fibre and at least one non-optical reinforcing fibre or other reinforcing elongate member) or it may be supported by a flexible elongate carrier member which is loosely housed in the elongate compartment and which is secured to the central core at longitudinally spaced positions along the length of the flexible stranded body.

The invention also includes a method of manufacturing the improved flexible stranded body, which method comprises causing a preformed elongate member of metal or metal alloy of approximately U-shaped transverse cross-section to travel in the direction of its length; drawing into the space bounded by the U-shaped elongate member at least one optical fibre; transversely folding or otherwise shaping the advancing U-shaped elongate member in such a way as to form a substantially circumferentially rigid central core having a closed elongate compartment within and extending throughout the length of the core in which the or each advancing optical fibre is loosely housed; periodically injecting a localised deposit of a hardenable material in a semi-fluid state into the elongate compartment, which deposits of hardenable material bond to the or each optical fibre and to the central core at longitudinally spaced positions along the length of the core, the rate of advance of the or each advancing optical fibre relative to the rate of advance of the elongate member being such that in each length of the core between adjacent positions at which the or each optical fibre is secured to the core, the length of the or each optical fibre exceeds the length of the elongate compartment between said adjacent positions by a controlled extent; and applying around the central core so formed at least one layer of helically wound bare elongate elements of metal or metal alloy.

Periodic injecting into the elongate compartment of each localised deposit of hardenable material in a semi-fluid state may be effected before the elongate compartment at the position of injection is completely closed but preferably, each local deposit of hardenable material is effected at a position where the elongate compartment is completely closed.

Feeding of the or each advancing optical fibre into the space bounded by the U-shaped elongate member and periodic injection of local deposits of hardenable material into the elongate compartment are preferably effected using a pair of substantially rigid coaxial tubes having an external diameter which is less than the internal diameter of the elongate compartment, which pair of coaxial rigid tubes is positioned in the space bounded by the U-shaped elongate member and extends beyond the means by which the U-shaped elongate member is transversely folded or otherwise shaped to form the central core having a closed elongate compartment, the or each advancing optical fibre being fed into the upstream end of the inner rigid tube and hardenable material in a semi-fluid state being periodically injected at a position downstream of said folding means into the closed elongate compartment through the outer tube.

The improved flexible stranded body of the present invention is especially suitable for use as a conductor of an overhead electric transmission system because, by virtue of the fact that the or each optical fibre is secured to the central core of the stranded body at longitudinally spaced positions along the length of the stranded body, the risk that the excess length of the or each optical fibre will accumulate at the lowest point of the elongate compartment of the suspended conductor is substantially reduced.

The invention is further illustrated by a description, by way of example, of a preferred overhead electric conductor and of the preferred method of manufacturing the preferred overhead conductor, with reference to the accompanying drawing, in which:-

Figure 1 is a transverse cross-sectional view of the overhead electric conductor, and

Figure 2 is a fragmental diagrammatic representation of the method of manufacture of the overhead electric conductor shown in Figure 1.

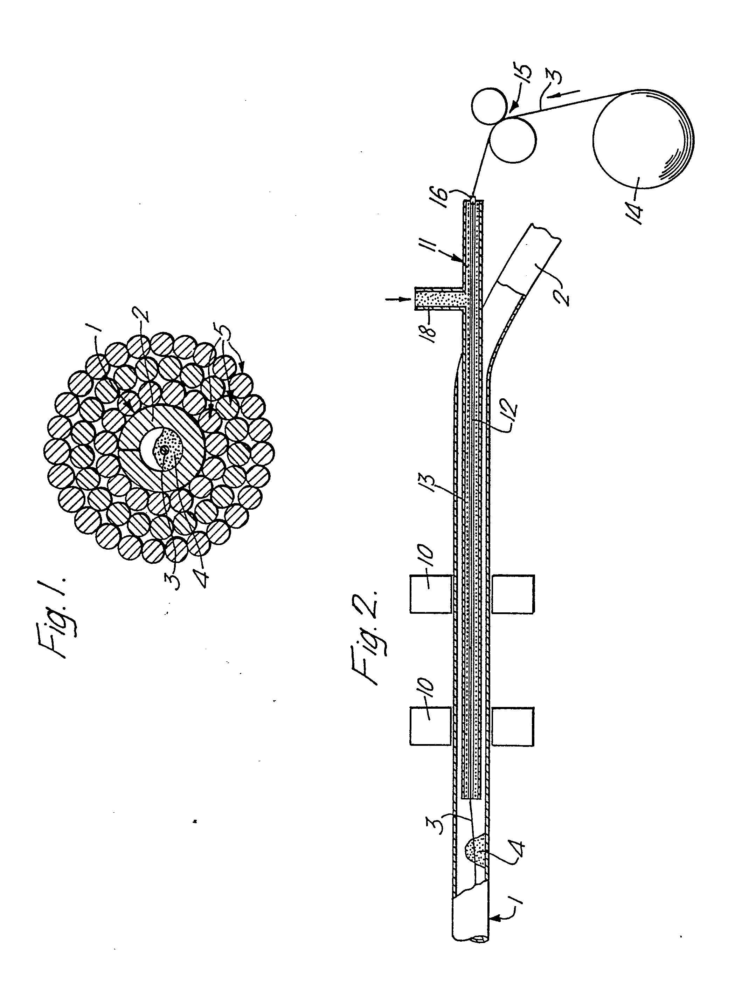

Referring to the drawing, the overhead electric conductor shown in Figure 1 comprises a central core 1 constituted by a single elongate tubular member 2 of aluminium-based alloy, an optical fibre 3 housed in the bore of the elongate member and secured to the elongate member by a local deposit 4 of hardened resin at each of a plurality of positions spaced approximately one metre apart along the length of the conductor. The part of the optical fibre 3 extending between any two adjacent local deposits 4 of hardened resin within the bore of the elongate member is approximately 3% greater than the distance between these local deposits so that this part of the optical fibre is loosely housed in the bore. The central core 1 is surrounded by three layers 5 of helically wound round wires of aluminium-based alloy, the directions of lay of adjacent layers being of opposite hand.

In the method of manufacture as shown in Figure 2, a preformed elongate member 2 of aluminium-based alloy of approximately U-shaped transverse cross-section is caused to travel in the direction of its length towards two longitudinally spaced folding dies 10. Positioned axially in the space bounded by the U-shaped elongate member 2 and extending beyond the folding dies 10 is a pair of substantially rigid coaxial tubes 11 having an external diameter which is less than the internal diameter of the central core 1 formed by folding the U-shaped elongate member. The optical fibre 3 is drawn from a spool 14 through pinch rollers 15 and a sealing gland 16, which is positioned at the upstream end of the inner tube 12, into the tube 12, the pinch rollers imparting a degree of restraint to the advancing optical fibre. Resin 4 in a semi-fluid state is fed periodically by means of a periodically-actuated plunger (not shown) through a port 18 near the upstream end of the pair of tubes 11, into the outer tube 13 the pressure and frequency at which the resin is injected into the tube 13 being such that local deposits 4 of resin are introduced into the bore of the travelling central core 1 at a postion downstream of the folding dies 10, each of which deposits secures the optical fibre 3 to the central core. The rate at which the optical fibre is drawn from the spool 14 and the degree of restraint imparted to the optical fibre are such that the part of the optical fibre extending between any two adjacent local deposits 4 of resin exceeds the distance between these local deposits by approximately 3%. Three layers of helically wound round wires of aluminium alloy are formed around the central core 1, the directions of lay of adjacent layers being of opposite hand, the layers being applied either in tandem with the operation of forming the central core or as separate operations.

CLAIMS:

1.      A flexible stranded body comprising a substantially circumferentially rigid central core of metal or metal alloy having an elongate compartment within and extending throughout the length of the core; at least one optical fibre loosely housed in the elongate compartment; and, surrounding the central core, at least one layer of helically wound bare elongate elements of metal or metal alloy; wherein the or each optical fibre is secured to the central core at longitudinally spaced positions along the length of the stranded body, the part of the optical fibre extending between any two adjacent positions at which the optical fibre is secured to the central core being loosely housed in, and of a length substantially greater than that of, that part of the elongate compartment extending between said two adjacent positions.

2.      A flexible stranded body as claimed in Claim 1, where the optical fibre is secured to the central core at each of said plurality of longitudinally spaced positions along the length of the stranded body by a local deposit of resin or other material that bonds both to the optical fibre and to the internal surface of the central core.

3.      A flexible stranded body as claimed in Claim 2, characterised in that the material bonded both to the optical fibre and to the internal surface of the central core at each of the longitudinally spaced positions along the length of the stranded body is a high
temperature performance pressure sensitive adhesive of
the silicone resin type.

4.      A flexible stranded body as claimed in any one of
the preceding Claims, wherein the optical fibre follows
a substantially helical path within the elongate compartment
and the distance between any two adjacent positions at which
the optical fibre is secured to the central core lies in the
range 10 to 12 times the pitch of the helix of the optical
fibre.

5.      A flexible stranded body as claimed in any one of the
preceding Claims, wherein the length of the part of the
optical fibre between any two adjacent positions at which
the optical fibre is secured to the central core exceeds
the distance between said two positions by from 1 to 3%.

6.      A flexible stranded body as claimed in any one
of the preceding Claims, characterised in the or each
optical fibre is a component element of an optical bundle.

7.      A flexible stranded body as claimed in any one of
Claims 1 to 5, wherein the or each optical fibre is
supported by a flexible elongate carrier member which is
loosely housed in the elongate compartment and which is
secured to the central core at longitudinally spaced
positions along the length of the stranded body.

8.      A flexible stranded body as claimed in any one of the
preceding Claims, wherein the flexible stranded body is an
overhead electric conductor.

10.     A method as claimed in Claim 9 wherein the or each optical fibre is fed into the space bounded by the U-shaped elongate member and periodic injection of local deposits of hardenable material are effected through a pair of substantially rigid coaxial tubes having an external diameter which is less than the internal diameter of the elongate compartment, which pair of coaxial rigid tubes is positioned in the space bounded by the U-shaped elongate member and extends beyond the means by which the U-shaped elongate member is transversely folded or otherwise shaped to form the central core having a closed elongate compartment, the or each advancing optical fibre being fed into the upstream end of the inner rigid tube and hardenable material in a semi-fluid state being periodically injected at a position downstream of said folding means into the closed elongate compartment through the outer tube.

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | G 02 B    5/16 |
| P,X | EP-A-0 050 495  (BICC LTD.)<br><br>* Page  3, paragraph 3 - page 4, paragraph 1 * | 1,5,6, 8 | H 01 B    5/10 |
| | --- | | |
| A | EP-A-0 037 129  (N.V. PHILIPS GLOEILAMPENFABRIEKEN)<br>* Page 3, lines 5-14 * | 1-4 | |
| | --- | | |
| A | EP-A-0 022 036  (RADIALL S.A.)<br><br>* Page 2, lines 12-23 * | 1,4,5, 7 | |
| | --- | | |
| D,A | GB-A-1 598 438  (BICC LTD.)<br>* Whole document * | 1,6-8 | |
| | ----- | | **TECHNICAL FIELDS SEARCHED (Int. Cl. 3)**<br><br>G 02 B    5/14<br>G 02 B    5/16<br>H 01 B    5/10 |

The present search report has been drawn up for all claims

| Place of search | Date of completion of the search | Examiner |
|---|---|---|
| BERLIN | 11-02-1983 | BOTTERILL K.J. |